# EUROPEAN PATENT APPLICATION

(11) **EP 4 379 015 A1**
(43) Date of publication of application: **05.06.2024**
(21) Application number: 22849539.6
(22) Date of filing: 27.07.2022
(51) Int. Cl.: C09J 175/08

(54) **TWO-PACK TYPE ADHESIVE COMPOSITION AND CURED OBJECT**

(30) Priority: 30.07.2021 JP 2021125688
(71) Applicant: AGC INC., Chiyoda-ku, Tokyo 1008405 (JP)
(72) Inventor: SHIMOMA Hitoshi, Tokyo 100-8405 (JP); NAKAMURA Makito, Tokyo 100-8405 (JP); SUZUKI Chitoshi, Tokyo 100-8405 (JP)
(74) Representative: Müller-Boré & Partner Patentanwälte PartG mbB
(86) International application number: PCT/JP2022/028935
(87) International publication number: WO 2023/008478

(57) **Abstract**

There is provided a two-component adhesive composition that is excellent in the tensile characteristics of a cured product, has a small temperature dependence of viscoelastic characteristics (storage modulus), and can stably exhibit adhesiveness in a wide temperature region, and a cured product. A two-component adhesive composition including: a main agent including an isocyanate group-terminated urethane prepolymer; and a curing agent including a polyoxyalkylene polymer in which a number of functional groups is 4 or more, wherein a number average molecular weight of the polyoxyalkylene polymer is 6000 or more.

## Description

### Technical Field

The present invention relates to a two-component adhesive composition, and particularly to a urethane-based two-component curable two-component adhesive composition that adheres different materials such as a resin and a metal, and a cured product.

### Background Art

In the automobile field, while the increase in environmental awareness and the trend toward no gasoline advance, weight reduction is required as a fuel consumption improvement measure. Steel plates are generally used for the interior and exterior articles, such as bodies, front doors, rear doors, back doors, front bumpers, rear bumpers, and rocker moldings, of automobiles, but in order to meet the demand for weight reduction, the number of cases increases where instead of steel plates, reinforced plastics such as carbon fiber-reinforced plastics and glass fiber-reinforced plastics, and various types of resin materials including polypropylene are used as the interior and exterior parts of automobiles. With this, the importance of techniques for adhering different materials such as a metal and a resin increases.

For adhesives that adhere different materials such as a resin material and a metal, cured adhesives' heat resistance, moist heat resistance, and creep resistance, particularly creep resistance under high temperature, retained for a long period in a state in which self-weight is loaded are required in addition to adhesiveness. Therefore, the application of two-component curable urethane-based adhesives, instead of conventionally used epoxy-based adhesives, is studied.

For example, PTL1 discloses a two-component curable adhesive composition having: a main agent further including a urethane prepolymer and the remaining polyisocyanate that is the remainder of the unreacted polyisocyanate; and a curing agent including an amorphous polyol compound having at least two hydroxyl groups in one molecule and having a number average molecular weight of 1000 or more, and a polyamine compound in a particular amount ratio, and it is stated that a cured product excellent in tensile characteristics such as breaking strength and breaking elongation and having a small temperature dependence of viscoelastic characteristics is obtained, and foaming can be suppressed.

PTL2 discloses a two-component urethane-based adhesive composition having: a main agent including a urethane prepolymer having an isocyanate group; and a curing agent containing a particular polyol compound having ethylene oxide at an end and having three active hydrogen-containing groups in one molecule, that is, being trifunctional, and it is stated that the two-component urethane-based adhesive composition is excellent in initial adhesiveness and long-term adhesiveness.

PTL3 discloses a two-component polyurethane adhesive composition in which trifunctional polypropylene oxide capped with ethylene oxide, and a polyisocyanate component in which a particular polyol and a polyisocyanate are mixed in a particular amount ratio are mixed, and it is stated that good characteristics are maintained under a wide range of temperature conditions.

### Citation List

### Patent Literature

PTL1: WO 2020/067527
PTL2: WO 2019/240046
PTL3: WO 2016/204978

### Summary of Invention

### Technical Problem

However, cured products obtained from the two-component adhesive compositions in the above-described patent literatures have weak adhesiveness under high temperature or under low temperature, and from the viewpoint of further adhesiveness improvement in a wide range of temperature, there is room for improvement in the temperature dependence of adhesiveness.

In view of the problem, it is an object of the present invention to provide a two-component adhesive composition that is excellent in the tensile characteristics of a cured product, has a small temperature dependence of viscoelastic characteristics (storage modulus), and can stably exhibit adhesiveness in a wide temperature region, and a cured product obtained by curing the two-component adhesive composition.

### Solution to Problem

The present inventors have studied diligently in order to solve the problem, and as a result, found that the problem can be solved by a two-component adhesive composition including a main agent including a prepolymer in which an isocyanate group is at an end, and a particular polyoxyalkylene polymer as a curing agent. Thus, the present inventors have completed the present invention.

Specifically, the present invention is as follows.
[1] A two-component adhesive composition including: a main agent including an isocyanate group-terminated urethane prepolymer; and a curing agent including a polyoxyalkylene polymer in which a number of functional groups is 4 or more, wherein a number average molecular weight of the polyoxyalkylene polymer is 6000 or more.
[2] The two-component adhesive composition according to the [1], wherein a proportion of a unit based on propylene oxide in the polyoxyalkylene polymer is 60% by mass or more.
[3] The two-component adhesive composition according to the [1] or [2], wherein the polyoxyalkylene polymer includes a unit based on ethylene oxide.
[4] The two-component adhesive composition according to the [3], wherein in the polyoxyalkylene polymer, a proportion of the unit based on ethylene oxide in the polyoxyalkylene polymer is 5% by mass or more and 40% by mass or less.
[5] The two-component adhesive composition according to any of the [1] to [4], wherein inter-crosslinking molecular weight obtained by dividing the number average molecular weight of the polyoxyalkylene polymer by a number of functional groups per molecule of the polyoxyalkylene polymer is 1400 or more and 9000 or less.
[6] The two-component adhesive composition according to any of the [1] to [5], wherein the functional group is a hydroxyl group.
[7] The two-component adhesive composition according to the [6], wherein an isocyanate index representing 100 times a molar ratio of isocyanate groups in the isocyanate group-terminated urethane prepolymer to hydroxyl groups in the polyoxyalkylene polymer (isocyanate group/hydroxyl group) is 80 or more and 150 or less.
[8] The two-component adhesive composition according to any of the [1] to [7], wherein a proportion of a total of the main agent and the curing agent in the two-component adhesive composition is 50% by mass or more.
[9] A cured product obtained by curing the two-component adhesive composition according to any of the [1] to [8].

### Advantageous Effects of Invention

According to the present invention, it is possible to provide a two-component adhesive composition that is excellent in the tensile characteristics of a cured product, has a small temperature dependence of viscoelastic characteristics (storage modulus), and can stably exhibit adhesiveness in a wide temperature region, and a cured product obtained by curing the two-component adhesive composition.

### Description of Embodiments

The definitions and meanings of the terms herein are as follows.

As used herein, ones considered preferred can be optionally adopted, and it can be said that combinations of preferred ones are more preferred.

As used herein, the description of "XX to YY" means "XX or more and YY or less". As used herein, for preferred numerical value ranges (for example, ranges of content), lower limit values and upper limit values described stepwise can each be independently combined. For example, from the description of "preferably 10 to 90, more preferably 30 to 60", "the preferred lower limit value (10)" and "the more preferred upper limit value (60)" can also be combined into "10 to 60". In the numerical value ranges described herein, the upper limit values or lower limit values of the numerical value ranges may be replaced by values shown in Examples.

A "unit" constituting a polymer means an atomic group that a monomer forms by polymerization.

A "polyoxyalkylene polymer" means a polymer having a polyoxyalkylene chain. A repeating unit based on an alkylene oxide is referred to as an "alkylene oxide unit".

An "isocyanate group-terminated urethane prepolymer" refers to a compound having an isocyanate group at at least part of the ends of the molecular chain, obtained by reacting an organic compound having two or more hydroxyl groups in one molecule with a polyisocyanate compound.
"Inter-crosslinking molecular weight" means a value obtained by dividing the number average molecular weight (Mn) of a polyoxyalkylene polymer by the average number of functional groups (the number of functional groups per molecule of the polyoxyalkylene polymer).

### (Two-Component Adhesive Composition)

The present invention is a two-component adhesive composition including: a main agent including an isocyanate group-terminated urethane prepolymer; and a curing agent including a polyoxyalkylene polymer in which the number of functional groups is 4 or more, wherein the number average molecular weight of the polyoxyalkylene polymer is 6000 or more.

For the two-component adhesive composition of the present invention, a cured product thereof is excellent in tensile characteristics, has a small temperature dependence of viscoelastic characteristics (storage modulus), and can stably exhibit adhesiveness in a wide temperature region. Each component will be described below.

### <Main Agent>

The main agent in the two-component adhesive composition of the present invention contains an isocyanate group-terminated urethane prepolymer.

The isocyanate group-terminated urethane prepolymer is obtained by reacting a polyisocyanate compound with a compound having two or more active hydrogen-containing groups in one molecule (hereinafter referred to as an "active hydrogen compound") so that isocyanate groups are in excess of active hydrogen-containing groups. Examples of the active hydrogen-containing group include a hydroxyl group, an amino group, and an imino group.

Examples of such an active hydrogen compound include polyols having two or more hydroxyl groups in one molecule, and polyamines having two or more amino groups in one molecule, and the active hydrogen compound is preferably a polyol.

### -Polyol-

The number average molecular weight (Mn) of the polyol is preferably 1000 or more and 50000 or less, more preferably 5000 to 30000, from the viewpoint that the viscosity of the isocyanate group-terminated urethane prepolymer obtained by reaction with a polyisocyanate compound has moderate fluidity at room temperature. In the present invention, the Mn is a value obtained by the same method as the method for measuring the Mn of the polyoxyalkylene polymer described later. When the Mn of the polyol is within the preferred range, the tensile characteristics and viscoelastic characteristics of a cured product obtained by curing the two-component adhesive composition of the present invention are easily made good.

When the polyol is a compound having two or more hydroxyl groups, the molecular weight, skeleton, and the like thereof are not particularly limited. Examples of the polyol include polyether polyols, polyester polyols, polymer polyols, poly(meth)acrylic polyols, polycarbonate polyols, castor oil-based polyols, and polyolefin polyols, and those described in [0016] to [0028] of JP 2020-37689 A can be used without particular limitation. One type of these may be used alone, or two or more of these may be used in combination.

As the polyol, a polymer polyol in which a polymer having a unit based on a (meth)acrylate monomer is dispersed in a polyether polyol can also be used. The polymer polyol may be a commercial product, and examples thereof include the "ULTIFLOW (registered trademark)" series and the "SHARPFLOW (registered trademark)" series (the above are manufactured by Sanyo Chemical Industries, Ltd.), and the "EXCENOL (registered trademark)" series (manufactured by AGC).

Further, a polyoxyalkylene polymer in which the number of functional groups is 4 or more described later may be used.

As used herein, (meth)acrylic means acrylic and/or methacrylic, and a (meth)acrylate means an acrylate and/or a methacrylate.

### -Polyisocyanate Compound-

The polyisocyanate compound used for the production of the isocyanate group-terminated urethane prepolymer is an organic compound having two or more isocyanate groups in one molecule. The number of isocyanate groups in one molecule is preferably 2 to 4. One polyisocyanate compound can be used alone, or two or more polyisocyanate compounds can be used in combination.

Examples of the polyisocyanate compound include linear or branched aliphatic diisocyanate compounds such as tetramethylene diisocyanate, pentamethylene diisocyanate, hexamethylene diisocyanate (HDI), 2,2,4-trimethylhexamethylene diisocyanate, 2,4,4-trimethylhexamethylene diisocyanate, dodecamethylene diisocyanate, lysine diisocyanate, 2-methylpentane-1,5-diisocyanate, and 3-methylpentane-1,5-diisocyanate;
alicyclic diisocyanate compounds such as norbornane diisocyanate (NBDI), isophorone diisocyanate (IPDI), hydrogenated xylylene diisocyanate, 4,4'-dicyclohexylmethane diisocyanate, 1,4-cyclohexane diisocyanate, methylcyclohexylene diisocyanate, 1,3-bis(isocyanatemethyl)cyclohexane, and dicyclohexylmethane diisocyanate (H₁₂MDI);
aromatic diisocyanate compounds such as tolylene diisocyanate (TDI), 2,2'-diphenylmethane diisocyanate, 2,4'-diphenylmethane diisocyanate, 4,4'-diphenylmethane diisocyanate (MDI), 1,3-phenylene diisocyanate, 1,4-phenylene diisocyanate, polymethylene polyphenylene polyisocyanate, xylylene diisocyanate, α,α,α',α'-tetramethylxylylene diisocyanate, 4,4'-dibenzyl diisocyanate, tolidine diisocyanate, and 1,5-naphthalene diisocyanate;
aromatic aliphatic diisocyanate compounds such as dialkyldiphenylmethane diisocyanate and tetraalkyldiphenylmethane diisocyanate; and
polyisocyanate compounds having three or more isocyanate groups in one molecule such as isocyanurate-modified products of the above-described diisocyanate compounds; biuret-modified products of the above-described diisocyanate compounds; allophanate-modified products of the above-described diisocyanate compounds; carbodiimide-modified products of the above-described diisocyanate compounds; tri- and higher functional isocyanate group-terminated urethane prepolymers (adduct-modified products) obtained by reacting the above-described diisocyanate compounds with polyols having three or more hydroxyl groups in one molecule; water-dispersible polyisocyanate compounds such as water-dispersible isocyanates and block isocyanates; and triphenylmethane triisocyanate.

Examples of commercial products of the isocyanurate-modified products include DURANATE TPA-100 and DURANATE TKA-100 (manufactured by Asahi Kasei Corporation) and Coronate HX (manufactured by Tosoh Corporation).

Examples of commercial products of the biuret-modified products include DURANATE 24A-100 and DURANATE 22A-75P (manufactured by Asahi Kasei Corporation).

Examples of commercial products of the tri- and higher functional isocyanate group-terminated urethane prepolymers include Coronate L, Coronate L-55E, and Coronate L-45E (all are manufactured by Tosoh Corporation).

Examples of commercial products of the water-dispersible isocyanates include DURANATE WB40-100, DURANATE WB40-80D, DURANATE WT20-100, DURANATE WL70-100, DURANATE WE50-100, and DURANATE WR80-70P (manufactured by Asahi Kasei Corporation), and Aquanate 105, Aquanate 130, Aquanate 140, Aquanate 200, and Aquanate 210 (manufactured by Tosoh Corporation).

Examples of commercial products of the block isocyanates include SU-268A, NBP-211, MEIKANATE CX, MEIKANATE TP-10, and DM-6400 (all are manufactured by Meisei Chemical Works, Ltd.); WM44-L70G (manufactured by Asahi Kasei Corporation); Aqua BI200 and Aqua BI220 (all are manufactured by Baxenden chemicals); TAKELAC W and TAKELAC WPB (all are manufactured by Mitsui Chemicals, Inc.); BURNOCK (manufactured by DIC CORPORATION); and ELASTRON (manufactured by DKS Co. Ltd.).

The content of isocyanate groups in the polyisocyanate compound is preferably 20% by mass or more, more preferably 25% by mass or more, and particularly preferably 30% by mass or more and preferably 50% by mass or less, more preferably 45% by mass or less, and further preferably 40% by mass or less from the viewpoint of obtaining a two-component adhesive composition that is excellent in the reactivity of the polyisocyanate compound with the active hydrogen compound, is excellent in the tensile characteristics of a cured product, has a small temperature dependence of viscoelastic characteristics (storage modulus), can stably exhibit adhesiveness in a wide temperature region, and is excellent in creep resistance at high temperature (90°C).

Preferred specific examples of the polyisocyanate compound containing isocyanate groups in the preferred range are aliphatic diisocyanate compounds, alicyclic diisocyanate compounds, and aromatic diisocyanate compounds and include MDI (isocyanate group content 33.6% by mass), polymeric MDI (isocyanate group content 31.0% by mass), crude MDI (a mixture of MDI and triphenylmethane triisocyanate), and IPDI (isocyanate group content 37.8% by mass).

When the isocyanate group-terminated urethane prepolymer is obtained, the isocyanate index representing 100 times the molar ratio of the isocyanate groups in the polyisocyanate compound to the hydroxyl groups in the polyol (isocyanate group/hydroxyl group) is preferably 110 or more and 600 or less.

Such an isocyanate index is preferably 120 or more, more preferably 125 or more, and particularly preferably 130 or more and preferably 500 or less, more preferably 450 or less, and particularly preferably 400 or less. When the isocyanate index is within the preferred range, an isocyanate group-terminated urethane prepolymer having a moderate molecular chain length can be produced, and therefore the productivity improves more. The isocyanate index within the preferred range is also preferred from the viewpoint of more decreasing the tensile characteristics and temperature dependence of viscoelastic characteristics (storage modulus) of a cured product obtained by curing the two-component adhesive composition of the present invention.

The isocyanate group-terminated urethane prepolymer can be produced by reacting a polyol with a polyisocyanate compound.

For the production of the isocyanate group-terminated urethane prepolymer, a catalyst can be used as needed. Examples of the catalyst include tertiary amine-based compounds; tin-based compounds; and non-tin-based compounds. One catalyst can be used alone, or two or more catalysts can be used in combination.

Examples of the tertiary amine-based compounds include triethylamine, triethylenediamine, and 1,8-diazabicyclo[5.4.0]-7-undecene (DBU).

Examples of the tin-based compounds include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate.

Examples of the non-tin-based compounds include titanium-based compounds such as dibutyltitanium dichloride, tetrabutyl titanate, and butoxytitanium trichloride; lead-based compounds such as lead oleate, lead 2-ethylhexanoate, lead benzoate, and lead naphthenate; iron-based compounds such as iron 2-ethylhexanoate and iron acetylacetonate; cobalt-based compounds such as cobalt benzoate and cobalt 2-ethylhexanoate; zinc-based compounds such as zinc naphthenate and zinc 2-ethylhexanoate; and zirconium-based compounds such as zirconium naphthenate.

The amount of the catalyst used when the catalyst is used is not particularly limited but is preferably 0.001 parts by mass or more, more preferably 0.002 parts by mass or more, and particularly preferably 0.003 parts by mass or more and preferably 1.0 part by mass or less, more preferably 0.2 parts by mass or less, and particularly preferably 0.05 parts by mass or less based on 100 parts by mass of the total of the polyol and the polyisocyanate compound.

For the production of the isocyanate group-terminated urethane prepolymer, a solvent can be used as needed.

Examples of the solvent include ketones such as acetone and methyl ethyl ketone; esters such as ethyl acetate; and aromatic hydrocarbons such as toluene and xylene. One solvent can be used alone, or two or more solvents can be used in combination.

The amount of the solvent used when the solvent is used is not particularly limited but is preferably 30 parts by mass or more, more preferably 40 parts by mass or more, and particularly preferably 50 parts by mass or more and preferably 500 parts by mass or less, more preferably 450 parts by mass or less, and particularly preferably 400 parts by mass or less based on 100 parts by mass of the total of the polyol and the polyisocyanate compound.

Examples of the method for producing the isocyanate group-terminated urethane prepolymer include the methods described below.

Production method 1: a method of charging a polyol, a polyisocyanate compound, an optional catalyst, and an optional solvent together

Production method 2: a method of charging a polyol, an optional catalyst, and an optional solvent, and adding a polyisocyanate compound dropwise thereto

In the case of the production method 2, the low molecular components in the raw materials are preferentially reacted, the molecular weight distribution can be more narrowed, and the reaction is easily controlled.

The reaction temperature is preferably 50°C or more, more preferably 60°C or more, and particularly preferably 65°C or more and less than 100°C, more preferably 95°C or less, and particularly preferably 80°C or less. When the reaction temperature is within the range, side reactions other than the urethane reaction are easily suppressed, and therefore the desired isocyanate group-terminated urethane prepolymer is easily obtained.

After the completion of the reaction, a reaction terminating agent may be added to deactivate the catalyst. Examples of the reaction terminating agent include acetyl acetone. Two or more reaction terminating agents may be used in combination.

The Mn of the isocyanate group-terminated urethane prepolymer is not particularly limited but is preferably 1500 or more, more preferably 2000 or more, and particularly preferably 2500 or more and preferably 150000 or less, more preferably 100000 or less, and particularly preferably 50000 or less. When the Mn is within the preferred range, an adhesive composition excellent in coating properties is obtained, and the viscosity during the synthesis can be adjusted.

The Mn of the isocyanate group-terminated urethane prepolymer can be obtained in the same manner as in the method for measuring the Mn of the polyoxyalkylene polymer described later.

The isocyanate group-terminated urethane prepolymer is preferably a urethane prepolymer obtained by reacting a polyether polyol with an aromatic polyisocyanate compound, from the viewpoint of being excellent in curability, adhesiveness, and the tensile characteristics of a cured product.

### <Curing Agent>

### (Polyoxyalkylene Polymer)

The two-component adhesive composition of the present invention includes a curing agent containing a polyoxyalkylene polymer in which the number of functional groups is 4 or more (hereinafter also simply referred to as a "polyoxyalkylene polymer"), and the number average molecular weight (hereinafter also described as "Mn") of such a polyoxyalkylene polymer is 6000 or more.

The Mn of the polyoxyalkylene polymer is preferably 6500 or more, more preferably 7000 or more. On the other hand, the Mn of the polyoxyalkylene polymer is preferably 60000 or less, more preferably 50000 or less, and further preferably 45000 or less. When the Mn of the polyoxyalkylene polymer is within the preferred range, the tensile characteristics and temperature dependence of viscoelastic characteristics (storage modulus) of a cured product obtained by curing the obtained two-component adhesive composition easily become better.

The molecular weight distribution of the polyoxyalkylene polymer is not particularly limited but is preferably less than 1.20. By setting the molecular weight distribution of the polyoxyalkylene polymer at less than 1.20, the reactivity easily becomes good, and the tensile characteristics and temperature dependence of viscoelastic characteristics (storage modulus) of a cured product obtained by curing the obtained two-component adhesive composition easily become better.

The Mn and molecular weight distribution of the polyoxyalkylene polymer are values obtained by measurement by the method described below.

For several types of monodisperse polystyrene having different degrees of polymerization as standard samples for molecular weight measurement, measurement is performed using a commercial GPC measuring apparatus (HLC-8320GPC, manufactured by Tosoh Corporation), and a calibration curve is prepared based on the relationship between the molecular weight and retention time of the polystyrene. The polyoxyalkylene polymer, which is a measurement sample, is diluted to 0.5% by mass with tetrahydrofuran and passed through a filter having a pore diameter of 0.5 µm, and then for the measurement sample, measurement is performed using the GPC measuring apparatus. The GPC spectrum of the measurement sample is computer-analyzed using the calibration curve to obtain the Mn and weight average molecular weight (hereinafter referred to as Mw) of the measurement sample.

The molecular weight distribution is the value calculated from the Mw and Mn and is the ratio of Mw to Mn (hereinafter referred to as "Mw/Mn").

The degree of unsaturation of the polyoxyalkylene polymer is not particularly limited but is preferably 0.05 meq/g or less, more preferably 0.03 meq/g or less, and particularly preferably 0.02 meq/g or less. The degree of unsaturation of the polyoxyalkylene polymer may be zero. When the degree of unsaturation of the polyoxyalkylene polymer is equal to or less than the upper limit value, the curability of the obtained two-component adhesive composition is better.

The degree of unsaturation of the polyoxyalkylene polymer is a value measured according to the method of JIS K1557-3: 2007.

The number of functional groups in the polyoxyalkylene polymer contained in the curing agent in the two-component adhesive composition of the present invention is 4 or more, preferably 4 to 10, more preferably 4 to 9, further preferably 4 to 8, and particularly preferably 4 to 6. The average number of functional groups, which is the number of functional groups per molecule of the polyoxyalkylene polymer, is preferably 4 or more, more preferably 4.2 or more, further preferably 4.5 or more, and particularly preferably 4.8 or more and preferably 10 or less, more preferably 9 or less, and further preferably 8 or less.

When the average number of functional groups of the polyoxyalkylene polymer is within the range, the tensile characteristics and temperature dependence of viscoelastic characteristics (storage modulus) of a cured product of the obtained two-component adhesive composition easily become better.

Examples of the functional group of the polyoxyalkylene polymer include a hydroxyl group or an amino group. The functional group of the polyoxyalkylene polymer is preferably a hydroxyl group, and more preferably a polyoxyalkylene polymer in which all functional groups are hydroxyl groups. The number of hydroxyl groups (hereinafter also referred to as "the number of hydroxyl groups") of the polyoxyalkylene polymer is preferably 4 or more, more preferably 4 to 10, further preferably 4 to 9, further preferably 4 to 8, and particularly preferably 4 to 6. Particularly, the average number of hydroxyl groups, which is the number of hydroxyl groups per molecule of the polyoxyalkylene polymer, is preferably 4 or more, more preferably 4.5 or more, further preferably 5 or more, and particularly preferably 6 or more. On the other hand, the average number of hydroxyl groups is preferably 10 or less, more preferably 9 or less, and further preferably 8 or less.

When the average number of hydroxyl groups of the polyoxyalkylene polymer is within the range, the tensile characteristics and temperature dependence of viscoelastic characteristics (storage modulus) of a cured product of the obtained two-component adhesive composition easily become better.

Also when two or more polyoxyalkylene polymers in which the number of functional groups in one molecule is different are used in combination as polyoxyalkylene polymers, the average number of functional groups as the whole of the polyoxyalkylene polymers is preferably 4 or more. The same applies when two or more polyoxyalkylene polymers in which the number of hydroxyl groups in one molecule is different are used in combination as polyoxyalkylene polymers.

The average number of hydroxyl groups per molecule of the polyoxyalkylene polymer can also be calculated by specifying the type(s) and molar ratio of the initiator(s) using ¹³C-NMR (nuclear magnetic resonance). In the analysis by ¹³C-NMR, characteristic peaks are seen for the initiator(s), and therefore the type(s) and molar ratio of the initiator(s) can be specified from the positions of the peaks and the peak areas.

Usually, the number of hydroxyl groups in one molecule of a polyoxyalkylene polymer matches the number of hydroxyl groups in one molecule of the initiator used when the polyoxyalkylene polymer is synthesized. When a polyoxyalkylene polymer is synthesized using, for example, glycerin, as an initiator, a polyoxyalkylene polymer in which the number of hydroxyl groups in one molecule is 3 is usually obtained. When a polyoxyalkylene polymer is synthesized using, for example, pentaerythritol, as an initiator, a polyoxyalkylene polymer in which the number of hydroxyl groups in one molecule is 4 is usually obtained. When a polyoxyalkylene polymer is synthesized using, for example, sorbitol, as an initiator, a polyoxyalkylene polymer in which the number of hydroxyl groups in one molecule is 6 is usually obtained.

The average number of hydroxyl groups per molecule of the polyoxyalkylene polymer can also be calculated from the number(s) of hydroxyl groups in one molecule based on the type(s) of the initiator(s), and the mole fraction(s) of the initiator(s). For example, when the amount of glycerin is 30 mol%, and the amount of sorbitol is 70 mol%, the average number of hydroxyl groups is 3 × 0.3 + 6 × 0.7 = 5.1.

The hydroxyl value of the polyoxyalkylene polymer is not particularly limited but is preferably 2 mg KOH/g or more, more preferably 5 mg KOH/g or more, and particularly preferably 8 mg KOH/g or more and preferably 50 mg KOH/g or less, more preferably 45 mg KOH/g or less, and particularly preferably 40 mg KOH/g or less. When the hydroxyl value of the polyoxyalkylene polymer is equal to or less than the upper limit value, the tensile characteristics and temperature dependence of viscoelastic characteristics (storage modulus) of a cured product of the obtained two-component adhesive composition easily become better.

The hydroxyl value of the polyoxyalkylene polymer is a value measured and calculated according to the B method of JIS K 1557-1: 2007.

In the polyoxyalkylene polymer, the content proportion of oxypropylene groups, that is, the proportion of units based on propylene oxide (hereinafter also described as "PO unit content"), to the total amount of oxyalkylene groups is preferably 60% by mass or more, more preferably 70% by mass or more, and further preferably 80% by mass or more.

The upper limit of the PO unit content in the polyoxyalkylene polymer may be 100% by mass and is preferably 95% by mass.

The polyoxyalkylene polymer may have an oxyethylene group, that is, a unit based on ethylene oxide. When the polyoxyalkylene polymer has an oxyethylene group, the content proportion of oxyethylene groups (ethylene oxide unit content; hereinafter also described as "EO unit content") to the total amount of oxyalkylene groups is preferably 40% by mass or less.

The EO unit content to the total amount of oxyalkylene groups in the polyoxyalkylene polymer is preferably 30% by mass or less, further preferably 20% by mass or less.

The lower limit of the EO unit content in the polyoxyalkylene polymer may be 0% by mass and is preferably 5% by mass.

When the EO unit content to the total amount of oxyalkylene groups in the polyoxyalkylene polymer is within the preferred range, the polyoxyalkylene polymer easily becomes amorphous and is therefore easily handled, and for a cured product of the obtained two-component adhesive composition, the gelation time shortens easily.

The PO unit content and the EO unit content to the total amount of oxyalkylene groups in the polyoxyalkylene polymer are calculated by obtaining the monomer composition of the oxyalkylene chain using ¹H-NMR. For example, when the polyoxyalkylene polymer is a polyol including a PO unit and an EO unit, the PO unit content and the EO unit content to the total amount of oxyalkylene groups can be obtained from the area ratio of the signal of the methyl group in the PO unit to the signals of the methylene groups in the PO unit and in the EO unit.

The alkylene oxides used when the polyoxyalkylene polymer is synthesized are not particularly limited as long as they are selected so that the PO unit content to the total amount of oxyalkylene groups in the polyoxyalkylene polymer is 60% by mass or more. The combined use of preferably an alkylene oxide having 2 to 5 carbon atoms such as ethylene oxide, 1,2-butylene oxide, 2,3-butylene oxide, or isobutylene oxide and propylene oxide is preferred, and the combined use of propylene oxide and ethylene oxide is more preferred.

When two or more alkylene oxides are subjected to ring-opening addition, the arrangement of the units derived from the alkylene oxides may be a random, block, or tapered arrangement. Here, when the arrangement of PO units and EO units is random, usually the polyoxyalkylene polymer may have a block form of PO units and a random form of PO units and EO units and may have a block form of EO units and a random form of PO units and EO units. When the arrangement of PO units and EO units is a block arrangement, the polyoxyalkylene polymer may have a block form of PO units (PO block), a block form of EO units (EO block), and a PO block in this order ("PO block-EO block-PO block" structure) or may have an EO block, a PO block, and an EO block in this order ("EO block-PO block-EO block" structure). Further, when the arrangement of PO units and EO units is tapered, usually the polyoxyalkylene polymer has a block form of PO units, a random form of PO units and EO units, and a block form of EO units.

When propylene oxide and an alkylene oxide other than propylene oxide (preferably ethylene oxide) are used in combination as alkylene oxides, the molar ratio of the PO unit content to the content of the units of the alkylene oxide other than propylene oxide is not particularly limited as long as the PO unit content to the total amount of oxyalkylene groups in the polyoxyalkylene polymer is 60% by mass or more. As the PO unit content increases, the glass transition point of the polyoxyalkylene polymer decreases, and therefore the polyoxyalkylene polymer is easily handled and the workability is good, particularly at low temperature, and the flexibility at low temperature of a cured product obtained by curing the two-component adhesive composition of the present invention is better.

When the polyoxyalkylene polymer contains an EO unit, and, for example, an EO unit is at an end, a primary hydroxyl group is at an end, and therefore the reactivity with the polyisocyanate compound tends to be higher than when a PO unit is at an end.

The polyoxyalkylene polymer may be used alone, and as long as the Mn thereof is 6000 or more, two or more types of polyoxyalkylene polymers may be used in combination.

When two or more polyoxyalkylene polymers are included, the Mn, molecular weight distribution, and PO unit content of each polyoxyalkylene polymer is preferably within the preferred range.

The method for producing the polyoxyalkylene polymer is not particularly limited but is preferably a method of subjecting alkylene oxides to ring-opening addition in the presence of a catalyst using one or more compounds having three or more active hydrogens in one molecule, preferably compounds having three or more hydroxyl groups in one molecule, as an initiator so that the average number of hydroxyl groups is 4 or more.

Examples of a compound having three hydroxyl groups in one molecule include glycerin, trimethylolethane, and trimethylolpropane. Examples of a compound having four or more hydroxyl groups in one molecule include tetra-and higher-hydric polyhydric alcohols such as diglycerin, pentaerythritol, dipentaerythritol, and tripentaerythritol; and sugars such as glucose, sorbitol, dextrose, fructose, sucrose, and methyl glucoside, or derivatives thereof. Examples also include low molecular weight polyether polyols obtained by reacting these with a small amount of an alkylene oxide.

As the catalyst for subjecting the alkylene oxide to ring-opening addition polymerization to the initiator, a conventionally known catalyst can be used. Examples of the catalyst include alkali catalysts such as KOH, transition metal compound-porphyrin complex catalysts such as complexes obtained by reacting organoaluminum compounds with porphyrins, double metal cyanide complex catalysts (hereinafter also described as "DMC catalysts"), and catalysts including phosphazene compounds.

When the polyoxyalkylene polymer is obtained using a DMC catalyst, it is preferred in that the molecular weight distribution of the obtained polyoxyalkylene polymer can be narrowed, and the polyoxyalkylene polymer having low viscosity is easily obtained.

For the DMC catalyst, a conventionally known compound can be used, and also for the method for producing the polymer using a DMC catalyst, a known method can be adopted. For example, the compounds and production methods disclosed in WO 2003/062301, WO 2004/067633, JP 2004-269776 A, JP 2005-015786 A, WO 2013/065802, and JP 2015-010162 A can be used.

As the method of subjecting an alkylene oxide to ring-opening addition polymerization to an initiator to obtain the polyoxyalkylene polymer, a conventionally known method can be adopted. For example, the production methods disclosed in WO 2011/125951 and JP 5648797 B can be used.

The curing agent in the two-component adhesive composition of the present invention may contain a catalyst, in addition to the above-described polyoxyalkylene polymer, from the viewpoint of promoting the effect when mixing the main agent and the curing agent.

Examples of the catalyst include the above-described tertiary amine-based compounds, tin-based compounds, and non-tin-based compounds that can be used in the production of the isocyanate group-terminated urethane prepolymer. One catalyst can be used alone, or two or more catalysts can be used in combination.

When the catalyst is blended, the amount of the catalyst is not particularly limited but is preferably 0.00001 parts by mass or more, more preferably 0.00005 parts by mass or more, and particularly preferably 0.0001 parts by mass or more and preferably 1.0 part by mass or less, more preferably 0.2 parts by mass or less, and particularly preferably 0.05 parts by mass or less based on 100 parts by mass of the polyoxyalkylene polymer.

In the two-component adhesive composition of the present invention, the isocyanate index representing 100 times the molar ratio of the isocyanate groups in the isocyanate group-terminated urethane prepolymer to the hydroxyl groups in the above-described polyoxyalkylene polymer (isocyanate group/hydroxyl group) is preferably 80 or more and 150 or less.

Such an isocyanate index is preferably 85 or more, more preferably 90 or more, and particularly preferably 95 or more and preferably 140 or less, more preferably 130 or less, and particularly preferably 120 or less. When the isocyanate index is within the preferred range, the tensile characteristics of a cured product obtained by curing the two-component adhesive composition of the present invention easily become good. The isocyanate index is the value obtained by centupling the ratio of the number of moles of the isocyanate groups of the isocyanate group-terminated urethane prepolymer to the total number of moles of the hydroxyl groups of the polyoxyalkylene polymer.

In the two-component adhesive composition of the present invention, the inter-crosslinking molecular weight obtained by dividing the number average molecular weight (Mn) of the polyoxyalkylene polymer by the average number of functional groups is preferably 1400 or more and 9000 or less. The inter-crosslinking molecular weight is more preferably 1500 or more, further preferably 1600 or more, and, on the other hand, more preferably 8500 or less, further preferably 8000 or less.

In the two-component adhesive composition of the present invention, when the functional groups of the polyoxyalkylene polymer are all hydroxyl groups, the inter-crosslinking molecular weight obtained by dividing the number average molecular weight (Mn) of the polyoxyalkylene polymer by the average number of hydroxyl groups (f) is preferably 1400 or more and 9000 or less. The inter-crosslinking molecular weight is more preferably 1500 or more, further preferably 1600 or more, and, on the other hand, more preferably 8500 or less, further preferably 8000 or less.

When such inter-crosslinking molecular weight is small, the crosslinking density tends to increase in a cured product obtained by reaction with the isocyanate group-terminated urethane prepolymer contained in the main agent. When the inter-crosslinking molecular weight is within the range, the tensile characteristics of a cured product obtained by curing the two-component adhesive composition of the present invention easily become better.

The main agent and the curing agent in the two-component adhesive composition of the present invention may further include a solvent, an additive described later, and the like.

The solvent is preferably the above-described solvent that can be used as needed, in the production of the isocyanate group-terminated urethane prepolymer.

When the solvent is contained, the amount of the solvent is preferably 30 parts by mass or more, more preferably 40 parts by mass or more, and particularly preferably 50 parts by mass or more and preferably 500 parts by mass or less, more preferably 450 parts by mass or less, and particularly preferably 400 parts by mass or less based on 100 parts by mass of the isocyanate group-terminated urethane prepolymer.

The proportion (content) of the total of the main agent and the curing agent in the two-component adhesive composition of the present invention is preferably 50% by mass or more and 100% by mass or less. The proportion of the total of the main agent and the curing agent is more preferably 55% by mass or more, further preferably 60% by mass or more, and more preferably less than 100% by mass, further preferably 99.5% by mass or less, and still further preferably 95% by mass or less.

The content ratio of the main agent to the curing agent in the two-component adhesive composition of the present invention is determined based on the above-described isocyanate index.

The proportion (content) of the total of the main agent and the curing agent in the solids of the two-component adhesive composition of the present invention is preferably 80% by mass or more, more preferably 90% by mass or more, and particularly preferably 95% by mass or more and may be 100% by mass.

### (Method for Producing Two-Component Adhesive Composition)

A known method can be applied to the method for producing the two-component adhesive composition of the present invention. For example, a main agent can be produced by uniformly stirring and mixing each component contained in the main agent, specifically, the above-described isocyanate group-terminated urethane prepolymer, and a solvent contained as needed, and one or two or more additives described later. A curing agent can be produced by uniformly stirring and mixing each component contained in the curing agent, specifically, the above-described polyoxyalkylene polymer, a catalyst component and a solvent contained as needed, and one or two or more additives described later.

For the stirring and mixing, a known stirring and mixing machine such as Plastomill, a kneader, a Banbury mixer, or a roll equipped with a heating apparatus can be used. The stirring and mixing is preferably performed under an inert gas atmosphere such as nitrogen gas or under a reduced pressure dehydration atmosphere.

The order of introduction of the components is not particularly limited.

The main agent and the curing agent are stored in different containers respectively. For the containers, various ones such as tubes and bottles can be utilized.

### <Additives That Can Be Blended into Two-Component Adhesive Composition>

The two-component adhesive composition of the present invention can include additives such as a hydrolysis inhibitor, an antioxidant, an ultraviolet absorbing agent, a light stabilizer, a filler, a plasticizer, an antistatic agent, a leveling agent, and other optional components as needed, in a range that does not impair the effect of the present invention.

### -Hydrolysis Inhibitor-

Examples of the hydrolysis inhibitor include carbodiimide-based, isocyanate-based, oxazoline-based, and epoxy-based hydrolysis inhibitors. One hydrolysis inhibitor can be used alone, or two or more hydrolysis inhibitors can be used in combination. Among these, carbodiimide-based hydrolysis inhibitors are preferred from the viewpoint of a hydrolysis suppression effect.

### --Carbodiimide-Based Hydrolysis Inhibitors--

The carbodiimide-based hydrolysis inhibitors are compounds having one or more carbodiimide groups in one molecule. Examples of monocarbodiimide compounds include dicyclohexylcarbodiimide, diisopropylcarbodiimide, dimethylcarbodiimide, diisobutylcarbodiimide, dioctylcarbodiimide, diphenylcarbodiimide, and naphthyl carbodiimide.

Polycarbodiimide compounds can be produced by subjecting a diisocyanate to a decarboxylation condensation reaction in the presence of a carbodiimidization catalyst.

Examples of the diisocyanate include MDI, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, IPDI, 4,4'-dicyclohexylmethane diisocyanate, and tetramethylxylylene diisocyanate.

Examples of the carbodiimidization catalyst include phospholene oxides such as 1-phenyl-2-phospholene-1-oxide, 3-methyl-2-phospholene-1-oxide, 1-ethyl-3-methyl-2-phospholene-1-oxide, 1-ethyl-2-phospholene-1-oxide, and 3-phospholene isomers thereof.

### --Isocyanate-Based Hydrolysis Inhibitors--

Examples of the isocyanate-based hydrolysis inhibitors include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, IPDI, 4,4'-dicyclohexylmethane diisocyanate, and 3,3'-dimethyl-4,4'-dicyclohexylmethane diisocyanate.

### --Oxazoline-Based Hydrolysis Inhibitors--

Examples of the oxazoline-based hydrolysis inhibitors include 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), and 2,2'-diphenylenebis(2-oxazoline).

### --Epoxy-Based Hydrolysis Inhibitors--

Examples of the epoxy-based hydrolytic agents include diglycidyl ethers of aliphatic diols such as 1,6-hexanediol, neopentyl glycol, and polyalkylene glycols; polyglycidyl ethers of aliphatic polyols such as sorbitol, sorbitan, polyglycerol, pentaerythritol, diglycerol, glycerol, and trimethylolpropane; polyglycidyl ethers of alicyclic polyols such as cyclohexanedimethanol; diglycidyl esters or polyglycidyl esters of aliphatic or aromatic polyvalent carboxylic acids such as terephthalic acid, isophthalic acid, naphthalenedicarboxylic acid, trimellitic acid, adipic acid, and sebacic acid; diglycidyl ethers or polyglycidyl ethers of polyhydric phenols such as resorcinol, bis(p-hydroxyphenyl)methane, 2,2-bis(p-hydroxyphenyl)propane, tris(p-hydroxyphenyl)methane, and 1,1,2,2-tetrakis(p-hydroxyphenyl)ethane; N-glycidyl derivatives of amines such as N,N-diglycidylaniline, N,N-diglycidyltoluidine, and N,N,N',N'-tetraglycidyl-bis-(p-aminophenyl)methane; triglycidyl derivatives of aminophenols; triglycidyl tris(2-hydroxyethyl)isocyanurate; triglycidyl isocyanurate; and epoxy resins such as orthocresol type epoxy resins and phenol novolac type epoxy resins.

The amount of the hydrolysis inhibitor added is not particularly limited but is preferably 5 parts by mass or less, more preferably 4.5 parts by mass or less, and particularly preferably 3 parts by mass or less based on 100 parts by mass of the isocyanate group-terminated urethane prepolymer.

### -Antioxidant-

Examples of the antioxidant include radical scavengers such as phenol-based compounds and amine-based compounds; and peroxide decomposers such as sulfur-based compounds and phosphorus-based compounds. One antioxidant can be used alone, or two or more antioxidants can be used in combination.

### --Phenol-Based Compounds--

Examples of the phenol-based compounds include 2,6-di-t-butyl-p-cresol, butylated hydroxyanisole, 2,6-di-t-butyl-4-ethylphenol, stearin-β-(3,5-di-t-butyl-4-hydroxyphenyl)propionate, 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), 3,9-bis[1,1-dimethyl-2-[β-(3-t-butyl-4-hydroxy-5-methylphenyl)propionyloxy]ethyl]2,4,8,10-tetraoxaspiro[5,5]undecane, benzenepropanoic acid, 3,5-bis(1,1-dimethylethyl)-4-hydroxy-,C7-C9 side chain alkyl esters (BASF product name Irganox 1135), 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis-[methylene-3-(3',5'-di-t-butyl-4'-hydroxyphenyl)propionate]methane, bis[3,3'-bis-(4'-hydroxy-3'-t-butylphenyl)butyric acid]glycol ester, 1,3,5-tris(3',5'-di-t-butyl-4'-hydroxybenzyl)-S-triazine-2,4,6-(1H,3H,SH)trione, and tocophenol.

### --Amine-Based Compounds--

Examples of the amine-based compounds include bis(2,2,6,6-tetramethyl-4-piperidyl)sebacate, polycondensates of dimethyl succinate and 1-(2-hydroxyethyl)-4-hydroxy-2,2,6,6-tetramethylpiperidineethanol, N,N',N",N"'-tetrakis-(4,6-bis-(butyl-(N-methyl-2,2,6,6-tetramethylpiperidin-4-yl)amino)-triazin-2-yl)-4,7-diazadecane-1,10-diamine, and polycondensates of dibutylamine-1,3,5-triazine-N,N'-bis(2,2,6,6-tetramethyl-4-piperidyl)-1,6-hexamethylenediamine and N-(2,2,6,6-tetramethyl-4-piperidyl)butylamine.

### --Sulfur-Based Compounds--

Examples of the sulfur-based compounds include dilauryl 3,3'-thiodipropionate, dimyristyl 3,3'-thiodipropionate, and distearyl 3,3'-thiodipropionate.

### --Phosphorus-Based Compounds--

Examples of the phosphorus-based compounds include triphenyl phosphite, diphenyl isodecyl phosphite, 4,4'-butylidene-bis(3-methyl-6-tert-butylphenyl ditridecyl)phosphite, cyclic neopentanetetrayl bis(octadecyl phosphite), tris(nonylphenyl)phosphite, tris(monononylphenyl)phosphite, tris(dinonylphenyl)phosphite, diisodecyl pentaerythritol diphosphite, 9,10-dihydro-9-oxa-10-phosphaphenanthrene-10-oxide, 10-(3,5-di-tert-butyl-4-hydroxybenzyl)-9,10-dihydro-9-oxa-10-phosphaphenanthrene-10-oxide, 10-decyloxy-9,10-dihydro-9-oxa-10-phosphaphenanthrene, tris(2,4-di-tert-butylphenyl)phosphite, cyclic neopentanetetrayl bis(2,4-di-tert-butylphenyl)phosphite, cyclic neopentanetetrayl bis(2,6-di-tert-butyl-4-methylphenyl)phosphite, and 2,2-methylenebis(4,6-di-tert-butylphenyl)octyl phosphite.

By using the antioxidant, the thermal deterioration of the isocyanate group-terminated urethane prepolymer can be prevented.

The amount of the antioxidant added is not particularly limited but is preferably 5 parts by mass or less, more preferably 3 parts by mass or less, and particularly preferably 2 parts by mass or less based on 100 parts by mass of the isocyanate group-terminated urethane prepolymer.

As the antioxidant, one or more phenol-based compounds, which are radical scavengers, are preferably used from the viewpoint of stability and an oxidation prevention effect. It is also possible to use one or more phenol-based compounds, which are radical scavengers, and one or more phosphorus-based compounds, which are peroxide decomposers, in combination. It is also possible to use a phenol-based compound, which is a radical scavenger, and a phosphorus-based compound, which is a peroxide decomposer, in combination as antioxidants and use these antioxidants and a hydrolysis inhibitor described above in combination.

### -Ultraviolet Absorbing Agent-

Examples of the ultraviolet absorbing agent include benzophenone-based compounds, benzotriazole-based compounds, salicylic acid-based compounds, oxalic acid anilide-based compounds, cyanoacrylate-based compounds, and triazine-based compounds. One ultraviolet absorbing agent can be used alone, or two or more ultraviolet absorbing agents can be used in combination.

The amount of the ultraviolet absorbing agent added is not particularly limited but is preferably 3 parts by mass or less, more preferably 2.5 parts by mass or less, and particularly preferably 2 parts by mass or less based on 100 parts by mass of the isocyanate group-terminated urethane prepolymer.

### -Light Stabilizer-

Examples of the light stabilizer include hindered amine-based compounds and hindered piperidine-based compounds. One light stabilizer can be used alone, or two or more light stabilizers can be used in combination.

The amount of the light stabilizer added is not particularly limited but is preferably 2 parts by mass or less, more preferably 1.5 parts by mass or less, and particularly preferably 1 part by mass or less based on 100 parts by mass of the isocyanate group-terminated urethane prepolymer.

### -Filler-

Examples of the filler include inorganic or organic fillers, for example, particularly, natural, heavy, or precipitated calcium carbonate optionally coated with a fatty acid, particularly stearic acid, barite (heavy spar), talc, quartz powders, silica sand, dolomite, wollastonite, kaolin, calcined kaolin, mica (potassium aluminum silicate), zeolite, molecular sieve, aluminum oxide, aluminum hydroxide, magnesium hydroxide, silica including finely ground silica from a pyrolysis process, industrially produced carbon black, graphite, metal powders, for example, aluminum, copper, iron, silver, or steel, and PVC powders or hollow spheres, and flame-retardant fillers, for example, hydroxides or hydrates, particularly hydroxides or hydrates of aluminum, preferably aluminum hydroxide.

The amount of the filler added is not particularly limited but is preferably 80 parts by mass or less, more preferably 70 parts by mass or less, and particularly preferably 60 parts by mass or less based on 100 parts by mass of the isocyanate group-terminated urethane prepolymer.

### -Plasticizer-

Examples of the plasticizer include di-2-ethylhexyl phthalate, dibutyl phthalate, dilauryl phthalate, dioctyl adipate, diisononyl phthalate (DINP), diisodecyl phthalate (DIDP), diisodecyl adipate, tributyl phosphate, trioctyl phosphate, propylene glycol adipate polyester, butylene glycol adipate polyester, epoxidized soybean oil, chlorinated paraffins, and liquid paraffins.

The amount of the plasticizer added is not particularly limited but is preferably 40 parts by mass or less, more preferably 30 parts by mass or less, and particularly preferably 25 parts by mass or less based on 100 parts by mass of the isocyanate group-terminated urethane prepolymer.

### -Antistatic Agent-

Examples of the antistatic agent include inorganic salts, polyhydric alcohol compounds, ionic liquids, and surfactants. One antistatic agent can be used alone, or two or more antistatic agents can be used in combination.

Among these, ionic liquids are preferred. The "ionic liquid" is also referred to as a room temperature molten salt and is a salt having fluidity at 25°C.

### --Inorganic Salts--

Examples of the inorganic salts include sodium chloride, potassium chloride, lithium chloride, lithium perchlorate, ammonium chloride, potassium chlorate, aluminum chloride, copper chloride, ferrous chloride, ferric chloride, ammonium sulfate, potassium nitrate, sodium nitrate, sodium carbonate, and sodium thiocyanate.

### --Polyhydric Alcohol Compounds--

Examples of the polyhydric alcohol compounds include propanediol, butanediol, hexanediol, polyethylene glycol, trimethylolpropane, and pentaerythritol.

### --Ionic Liquids--

Examples of the ionic liquids include ionic liquids including imidazolium ions such as 1-ethyl-3-methylimidazolium bis(trifluoromethylsulfonyl)imide, 1,3-dimethylimidazolium bis(trifluoromethylsulfonyl)imide, and 1-butyl-3-methylimidazolium bis(trifluoromethylsulfonyl)imide; ionic liquids including pyridinium ions such as 1-methylpyridinium bis(trifluoromethylsulfonyl)imide, 1-butylpyridinium bis(trifluoromethylsulfonyl)imide, 1-hexylpyridinium bis(trifluoromethylsulfonyl)imide, 1-octylpyridinium bis(trifluoromethylsulfonyl)imide, 1-hexyl-4-methylpyridinium bis(trifluoromethylsulfonyl)imide, 1-hexyl-4-methylpyridinium hexafluorophosphate, 1-octyl-4-methylpyridinium bis(trifluoromethylsulfonyl)imide, 1 -octyl-4-methylpyridinium bis(fluorosulfonyl)imide, 1-methylpyridinium bis(perfluoroethylsulfonyl)imide, and 1-methylpyridinium bis(perfluorobutylsulfonyl)imide; ionic liquids including ammonium ions such as trimethylheptylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N-heptylammonium bis(trifluoromethanesulfonyl)imide, and tri-n-butylmethylammonium bistrifluoromethanesulfonimide; and other ionic liquids such as pyrrolidinium salts, phosphonium salts, and sulfonium salts.

### --Surfactants--

Examples of the surfactants include nonionic low molecular surfactants such as glycerin fatty acid esters, polyoxyalkylene alkyl ethers, polyoxyethylene alkyl phenyl ethers, polyoxyethylene alkylamines, polyoxyethylene alkylamine fatty acid esters, and fatty acid diethanolamides; anionic low molecular surfactants such as alkyl sulfonates, alkylbenzene sulfonates, and alkyl phosphates; cationic low molecular surfactants such as tetraalkylammonium salts and trialkylbenzylammonium salts; amphoteric low molecular surfactants such as alkyl betaines and alkylimidazolium betaines; nonionic polymeric surfactants such as a polyether ester amide type, an ethylene oxide-epichlorohydrin type, and a polyether ester type; anionic polymeric surfactants such as a polystyrene sulfonic acid type; cationic polymeric surfactants such as a quaternary ammonium base-containing acrylate polymer type; and amphoteric polymeric surfactants such as amino acid type amphoteric surfactants such as higher alkyl aminopropionates, and betaine type amphoteric surfactants such as higher alkyl dimethyl betaines and higher alkyl dihydroxyethyl betaines.

The amount of the antistatic agent added is not particularly limited but is preferably 0.01 parts by mass or more, more preferably 0.03 parts by mass or more, and particularly preferably 0.05 parts by mass or more and preferably 10 parts by mass or less, more preferably 5 parts by mass or less, and particularly preferably 3 parts by mass or less based on 100 parts by mass of the isocyanate group-terminated urethane prepolymer.

### -Leveling Agent-

Examples of the leveling agent include acrylic leveling agents, fluorine-based leveling agents, and silicone-based leveling agents. One leveling agent can be used alone, or two or more leveling agents can be used in combination. Among these, acrylic leveling agents are preferred.

The amount of the leveling agent added is not particularly limited but is preferably 0.001 parts by mass or more, more preferably 0.01 parts by mass or more, and particularly preferably 0.1 parts by mass or more and preferably 2 parts by mass or less, more preferably 1.5 parts by mass or less, and particularly preferably 1 part by mass or less based on 100 parts by mass of the isocyanate group-terminated urethane prepolymer.

### -Other Optional Components-

Examples of other optional components include catalysts, other resins other than isocyanate terminated urethane prepolymers, metal powders, colorants (pigments and the like), foil-like materials, conductive agents, silane coupling agents, lubricants, corrosion inhibitors, heat resistance stabilizers, weather resistance stabilizers, polymerization inhibitors, and antifoaming agents.

### (Method for Using)

As the method for using the two-component adhesive composition of the present invention, the main agent and the curing agent should be mixed and used.

The two-component adhesive composition of the present invention can be cured, for example, under the conditions of 5 to 90°C and a relative humidity of 5 to 95%. The temperature in mixing is preferably 30°C or more, more preferably 35°C or more, and particularly preferably 40°C or more and less than 100°C, more preferably 80°C or less, and particularly preferably 60°C or less. When the temperature is within the range, side reactions other than the urethane reaction are easily suppressed.

The two-component adhesive composition of the present invention can be used for adhering glass, rubber, or a metal to a resin material or the like. Examples of the resin material include polyolefins such as polypropylene, polyethylene, ethylene-propylene copolymers, and cycloolefin polymers; polyesters such as polyethylene terephthalate and polybutylene terephthalate; polymethyl methacrylate; polycarbonates; polystyrene; acrylonitrile-styrene copolymers; polyvinyl chloride; polyacetates; acrylonitrile-butadienestyrene copolymers; and polyamides.

These resin materials may be subjected to surface treatment such as flame treatment, corona treatment, or ITRO treatment. These resin materials may contain a filler such as talc, calcium carbonate, or alumina and may be reinforced with carbon fibers, glass fibers, or the like.

The two-component adhesive composition of the present invention can be used for the joining of the parts of not only an automobile body but various structures. The two-component adhesive composition of the present invention can also be used, for example, as a paint, a waterproof material, a floor material, an elastomer, an artificial leather, and spandex, in addition to being used as an adhesive.

### (Cured Product)

The cured product of the present invention is a cured product obtained by curing the two-component adhesive composition of the present invention.

### Examples

The present invention will be described in detail below by giving Examples. However, the present invention is not limited by the following Examples.

### <Synthesis of Polyoxyalkylene Polymer>

### [Synthesis Example 1]

5760 g of propylene oxide was polymerized in the presence of an alkali catalyst using 1200 g of a tetraol (Mn: 1200) obtained by subjecting propylene oxide to ring-opening polymerization to pentaerythritol, as an initiator (hereinafter referred to as an "initiator A"), and then subsequently 1040 g of ethylene oxide was further polymerized, and the neutralized salt was removed to obtain a polyoxyalkylene polymer (hereinafter referred to as a "polyol A1") which was polyoxypropylene tetraol having EO units in a block form and in which the EO unit content was 13% by mass.

The Mn, average number of hydroxyl groups, hydroxyl value, content of EO units, content of PO units, and inter-crosslinking molecular weight of the obtained polyoxyalkylene polymer (polyol A1) were measured as follows. The results are shown in Table 1.

### <<Number Average Molecular Weight (Mn)>>

The Mn of the polyoxyalkylene polymer is the polystyrene equivalent molecular weight obtained by measurement by gel permeation chromatography (GPC) under the following conditions using a calibration curve prepared using standard polystyrene samples whose molecular weight is known.

### -GPC Measurement Conditions-

Type of machine used: HLC-8220GPC (manufactured by Tosoh Corporation)
Data processing apparatus: SC-8020 (manufactured by Tosoh Corporation)
Columns used: Two of TSG gel SuperMultiporeHZ 4000 (manufactured by Tosoh Corporation) and two of TSG gel SuperMultiporeHZ 2500 (manufactured by Tosoh Corporation) were coupled and used.
Column temperature: 40°C
Detector: RI
Solvent: tetrahydrofuran
Flow rate: 0.35 mL/min
Sample concentration: 0.5% by mass
Amount injected: 20 µL
Standard samples for calibration curve preparation: polystyrene ([Easical] PS-2 [Polystyrene Standards], manufactured by Polymer Laboratories)

### <<Average Number of Hydroxyl Groups (f)>>

The number of hydroxyl groups of the initiator used in the synthesis of each polyoxyalkylene polymer was the average number of hydroxyl groups (f) of each polyoxyalkylene polymer as it was. For example, the average number of hydroxyl groups (f) is 3 in the case of glycerin, 4 in the case of pentaerythritol, and 6 in the case of sorbitol.

### «Hydroxyl Value»

The hydroxyl value of the polyoxyalkylene polymer was calculated according to the B method of JIS K 1557-1: 2007.

### <<Content of Oxypropylene Groups (PO Units) and Oxyethylene Groups (EO Units)>>

The content of PO units and EO units to the total amount of oxyalkylene groups in the polyoxyalkylene polymer was calculated by obtaining the monomer composition of the oxyalkylene chain using ¹H-NMR. For example, when the polyoxyalkylene polymer is a polyol including propylene oxide and ethylene oxide, the PO unit content and the EO unit content can be obtained from the area ratio of the signal of the methyl group in the PO unit to the signals of the methylene groups in the PO unit and in the EO unit.

### <<Inter-Crosslinking Molecular Weight>>

The inter-crosslinking molecular weight of the polyoxyalkylene polymer was obtained by dividing Mn by f.

### [Synthesis Example 2]

30800 g of propylene oxide was polymerized in the presence of a zinc hexacyanocobaltate-tert-butanol complex catalyst (hereinafter referred to as a "TBA-DMC catalyst") using 1200 g of the initiator A to obtain a polyoxyalkylene polymer (hereinafter referred to as a "polyol A2") which was polyoxypropylene tetraol.

### [Synthesis Example 3]

6620 g of propylene oxide was polymerized in the presence of a TBA-DMC catalyst using 880 g of a hexaol (Mn: 880) obtained by subjecting propylene oxide to ring-opening polymerization to sorbitol, as an initiator (hereinafter referred to as an "initiator B"), to obtain a polyoxyalkylene polymer (hereinafter referred to as a "polyol A3") which was polyoxypropylene hexaol.

### [Synthesis Example 4]

7360 g of propylene oxide was polymerized in the presence of an alkali catalyst using 1000 g of a hexaol (Mn: 1000) obtained by subjecting propylene oxide to ring-opening polymerization to sorbitol, as an initiator, and then subsequently 1240 g of ethylene oxide was further polymerized, and the neutralized salt was removed to obtain a polyoxyalkylene polymer (hereinafter referred to as a "polyol A4") which was polyoxypropylene hexaol having EO units in a block form and in which the EO unit content was 13% by mass.

### [Synthesis Example 5]

41120 g of propylene oxide was polymerized in the presence of a TBA-DMC catalyst using 880 g of the initiator B to obtain a polyoxyalkylene polymer (hereinafter referred to as a "polyol A5") which was polyoxypropylene hexaol.

### [Synthesis Example 6]

3360 g of propylene oxide was polymerized in the presence of an alkali catalyst using 1000 g of a triol (Mn: 1000) obtained by subjecting propylene oxide to ring-opening polymerization to glycerin, as an initiator (hereinafter referred to as an "initiator C"), and then subsequently 740 g of ethylene oxide was further polymerized, and the neutralized salt was removed to obtain a polyoxyalkylene polymer (hereinafter referred to as a "polyol C1") which was polyoxypropylene triol having EO units in a block form and in which the EO unit content was 15.3% by mass.

### [Synthesis Example 7]

4520 g of propylene oxide was polymerized in the presence of a TBA-DMC catalyst using 1000 g of the initiator C, and then subsequently 480 g of ethylene oxide was further polymerized using a KOH catalyst to obtain a polyoxyalkylene polymer (hereinafter referred to as a "polyol C2") which was polyoxypropylene triol having EO units in a block form and in which the EO unit content was 8% by mass.

### [Synthesis Example 8]

9000 g of propylene oxide was polymerized in the presence of a TBA-DMC catalyst using 1000 g of the initiator C to obtain a polyoxyalkylene polymer (hereinafter referred to as a "polyol C3") which was polyoxypropylene triol.

### [Synthesis Example 9]

7800 g of propylene oxide was polymerized in the presence of a TBA-DMC catalyst using 1000 g of the initiator C, and then subsequently 1200 g of ethylene oxide was further polymerized using a KOH catalyst to obtain a polyoxyalkylene polymer (hereinafter referred to as a "polyol C4") which was polyoxypropylene triol having EO units in a block form and in which the EO unit content was 12% by mass.

### [Synthesis Example 10]

9000 g of a mixture obtained by mixing propylene oxide and ethylene oxide in the ratio of 78% to 22% was polymerized in the presence of a TBA-DMC catalyst using 1000 g of the initiator C to obtain a polyoxyalkylene polymer (hereinafter referred to as a "polyol C5") which was polyoxypropylene triol having EO units in a random form and in which the content of EO units was 19.8% by mass.

### [Synthesis Example 11]

14000 g of propylene oxide was polymerized in the presence of a TBA-DMC catalyst using 1000 g of the initiator C to obtain a polyoxyalkylene polymer (hereinafter referred to as a "polyol C6") which was polyoxypropylene triol.

### [Synthesis Example 12]

14000 g of a mixture obtained by mixing propylene oxide and ethylene oxide in the ratio of 22% to 78% was polymerized in the presence of a TBA-DMC catalyst using 1000 g of the initiator C to obtain a polyoxyalkylene polymer (hereinafter referred to as a "polyol C7") which was polyoxypropylene triol having EO units in a random form and in which the content of EO units was 20.5% by mass.

### [Synthesis Example 13]

4140 g of propylene oxide was polymerized in the presence of an alkali catalyst using 1360 g of the initiator A to obtain a polyoxyalkylene polymer (hereinafter referred to as a "polyol C8") which was polyoxypropylene hexaol.

The Mn, average numbers of hydroxyl groups, hydroxyl values, content of EO units, content of PO units, and inter-crosslinking molecular weight of the obtained polyoxyalkylene polymers (polyols A2 to A5 and C1 to C8) were measured in the same manner as for the polyol A1. The results are shown together in Table 1.

**Table 1**

| Polyol | Number average molecular weight (Mn) | Average number of hydroxyl groups | Hydroxyl value (mgKOH/g) | EO content (%by mass) | PO content (% by mass) | Inter-crosslinking molecular weight |
|---|---|---|---|---|---|---|
| A1 | 7800 | 4 | 28.7 | 13.0 | 87.0 | 1950 |
| A2 | 29100 | 4 | 7.7 | 0.0 | 100.0 | 7280 |
| A3 | 7600 | 6 | 44.2 | 0.0 | 100.0 | 1270 |
| A4 | 9900 | 6 | 34.0 | 13.0 | 87.0 | 1650 |
| A5 | 39600 | 6 | 8.5 | 0.0 | 100.0 | 6600 |
| C1 | 5850 | 3 | 28.8 | 15.3 | 84.7 | 1950 |
| C2 | 5850 | 3 | 28.8 | 8.0 | 92.0 | 1950 |
| C3 | 9900 | 3 | 17.0 | 0.0 | 100.0 | 3300 |
| C4 | 9900 | 3 | 17.0 | 12.0 | 88.0 | 3300 |
| C5 | 9900 | 3 | 17.0 | 19.8 | 81.2 | 3300 |
| C6 | 14600 | 3 | 11.5 | 0.0 | 100.0 | 4870 |
| C7 | 15700 | 3 | 10.7 | 20.5 | 79.5 | 5230 |
| C8 | 550 | 4 | 412.0 | 0.0 | 100.0 | 136 |

### <Synthesis of Main Agents>

### [Blending 1]

(1) 110 g of a polyisocyanate compound (Millionate MT manufactured by Tosoh Corporation: monomeric MDI, isocyanate group content 33.5% by mass) was added to a reaction container equipped with a thermometer, a stirrer, and a cooling tube. Then, 490 g of a polyol compound (EXCENOL-5030 manufactured by AGC: a polyoxypropylene polymer having a number average molecular weight of 5100 and using glycerin as an initiator) was added, mixed at room temperature, then gradually heated, and reacted at an internal temperature of about 80°C for about 8 h to obtain an isocyanate group-terminated urethane prepolymer P1 in which the content of isocyanate groups including an end was 4.0% by mass.
(2) 40 g of the isocyanate group-terminated urethane prepolymer P1 obtained above, 15 g of a plasticizer (DINP: diisononyl phthalate, manufactured by J-PLUS Co., Ltd.), and 20 g of calcium carbonate (manufactured by NITTO FUNKA KOGYO K.K., NS#400) were placed in a container and stirred by a stirrer (vacuum stirring defoaming mixer: V-mini300 manufactured by EME) at 1400 rpm/min for 10 min to obtain a main agent of blending 1.

### [Blending 2 to 6]

Main agents of blending 2 to blending 6 were obtained in the same manner as for the blending 1 except that the amounts of the isocyanate group-terminated urethane prepolymer P1, the plasticizer, and calcium carbonate blended were amounts shown in Table 2.

**[Table 2]**

| | | Blending 1 | Blending 2 | Blending 3 | Blending 4 | Blending 5 | Blending 6 |
|---|---|---|---|---|---|---|---|
| Blending [parts by mass] | Prepolymer P1 | 40 | 40 | 40 | 40 | 40 | 40 |
| | Plasticizer (DINP) | 15 | 15 | 15 | 15 | 15 | 15 |
| | Calcium carbonate | 20 | 23 | 21 | 18 | 14 | 5 |

### <Production and Evaluation of Two-Component Adhesive Compositions>

### [Example 1]

A cartridge 1 was filled with the main agent of the blending 1. On the other hand, a cartridge 2 was filled with a mixture prepared by stirring 69 g of the polyol A1 as a curing agent, 0.04 g of triethylenediamine (TEDA; manufactured by JUNSEI CHEMICAL CO., LTD.) as a catalyst, and 15 g of calcium carbonate as a filler by a stirrer (vacuum stirring defoaming mixer: V-mini300 manufactured by EME) at 1400 rpm/min for 10 min.

The cartridges 1 and 2 were set in extrusion guns respectively, and mixing nozzles were mounted at the tips. The main agent of the blending 1 and the mixture were extruded on a release film so that the ratio of the amount discharged from the cartridge 1 to the amount discharged from the cartridge 2 was 3:4, stretched so that the thickness was about 200 µm, and allowed to stand under an atmosphere of 23°C and a relative humidity of 50% for 72 h to prepare a sheet-like cured product.

Here, the value obtained by centupling the number of isocyanate groups of the main agent to the average number of hydroxyl groups of the polyol A1 was the isocyanate index of the two-component adhesive composition.

### «Gelation Time»

In the same manner as above, cartridges 1 and 2 were filled with the main agent and the curing agent, mixing nozzles were set at the tips of respective extrusion guns, and the main agent and the curing agent were discharged. For the obtained adhesive composition, the loss tangent (tan δ) was measured under a nitrogen atmosphere at 25°C under the conditions of a cone diameter of 25 mm and a frequency of 1 Hz using MCR301 manufactured by Anton Paar. The time when the tan δ reached 1, starting from the time when the main agent and the curing agent were discharged from the mixing nozzles was the gelation time.

### <<Breaking Strength>>

For the obtained sheet-like cured product, the tensile breaking strength (unit: MPa) was measured at a tensile rate of 300 mm/min according to JIS K 7312: 1996 using TENSILON (manufactured by A&D Company, Limited, product name: RTG-1310).

### <<Storage Moduli and Modulus Ratio>>

For the obtained sheet-like cured product, the storage moduli E' in the temperature range of -80°C or more and 150°C or less were measured under the conditions of a strain of 1% and a heating rate of 3°C/min in a tensile mode using a dynamic viscoelasticity measuring apparatus (DMA242E Artemis manufactured by Netzsch).

The storage moduli (MPa) at -40°C and 130°C were read from the obtained storage viscoelastic modulus curve. The proportion of the storage modulus at 130°C (β) to the storage modulus at -40°C (α) (β/α; %) is shown in the table as the modulus ratio. It is meant that as the modulus ratio approaches 100%, the temperature dependence of the storage modulus decreases, and the lifting and peeling and cracking of the cured product can be suppressed even at low temperature.

### [Examples 2 to 13]

Two-component adhesive compositions were produced by the same procedure as in Example 1 except that the types of the main agent and the curing agent and the amounts of the main agent and the curing agent blended, and the amounts of the catalyst and calcium carbonate blended were changed as shown in Table 3. The evaluation results of the isocyanate index of each two-component adhesive composition, and the gelation time, the breaking strength, the storage moduli, and the modulus ratio are shown in Table 3.

**Table 3**

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Blending | Main agent | Type (parts by mass) | Blending 1 (75) | Blending 2 (78) | Blending 3 (76) | Blending 4 (13) | Blending 1 (75) | Blending 1 (75) | Blending 1 (75) | Blending 1 (75) | Blending 1 (75) | Blending 5 (75) | Blending 1 (69) | Blending 1 (75) | Blending 6 (60) |
| | Curing agent [polyol] | Type (parts by mass) | A1 (69.0) | A2 (257.0) | A3 (44.5) | A4 (56.0) | A5 (232.0) | C1 (59.0) | C2 (69.0) | C3 (116.0) | C4 (116.0) | C5 (115.0) | C6 (169.0) | C7 (181.0) | C8 (4.7) |
| | Catalyst | TEDA | 0.04 | 1.50 | 0.20 | 0.02 | 1.00 | 0.06 | 0.06 | 0.70 | 0.08 | 0.60 | 1.20 | 0.80 | 0.10 |
| | Calcium carbonate | NS#400 | 15 | 2 | 12 | 17 | 17 | 16 | 31 | 33 | 34 | 34 | 60 | 68 | 10 |
| | Isocyanate index | | 110 | 110 | 110 | 109 | 110 | 110 | 110 | 110 | 110 | 110 | 110 | 110 | 110 |
| Evaluation | Gelation time | (min) | 23 | 28 | 22 | 30 | 25 | 25 | 26 | 26 | 23 | 21 | 30 | 21 | 23 |
| | Breaking strength | (MPa) | 1.11 | 1.14 | 1.70 | 1.36 | 1.19 | 1.75 | 1.05 | 1.42 | 1.69 | 1.55 | 1.68 | 1.82 | 2.11 |
| | -40°C storage modulus (α) | (MPa) | 2.7 | 2.5 | 4.3 | 1.8 | 2.0 | 2.5 | 2.0 | 2.1 | 2.8 | 2.2 | 2.0 | 1.6 | 7.5 |
| | 130°C storage modulus (β) | (MPa) | 2.9 | 2.4 | 4.5 | 2.0 | 1.9 | 1.6 | 1.4 | 1.6 | 2.4 | 1.8 | 0.7 | 0.5 | 3.0 |
| | Modulus ratio (β/α) | (%) | 107 | 98 | 104 | 116 | 96 | 64 | 69 | 77 | 87 | 80 | 37 | 33 | 40 |

As shown in Table 3, in Examples 1 to 5, the obtained cured products have sufficient tensile characteristics (breaking strength: 1 MPa or more) and have a low temperature dependence of the storage modulus (the ratio between storage moduli at -40°C and 130°C is 90% or more) and can exhibit good adhesiveness in a wide temperature region. In Examples 1 and 4 in which a polyoxyalkylene polymer containing EO units is used, even if the amount of the catalyst blended is small, the gelation time is equivalent, and it can be said that the reactivity is good. In Example 5, a polyoxyalkylene polymer having large inter-crosslinking molecular weight is used, and the crosslinking density in the cured product can be interpreted as low, but the number of hydroxyl groups is 6, and therefore the number of meshes in the cured product is presumed to be relatively large, and it is considered that the storage modulus is maintained even at 130°C.

In contrast to this, in Examples 6 to 13, the breaking strength of the obtained cured products was high, but the temperature dependence of the storage modulus was large, and therefore the result that adhesiveness could be exhibited in a wide temperature region was not obtained.

### Industrial Applicability

The two-component adhesive composition obtained by the present invention can be preferably used for the joining of the parts of various structures such as an automobile body. The two-component adhesive composition of the present invention is preferably used, for example, as a paint, a waterproof material, a floor material, an elastomer, an artificial leather, and spandex, in addition to being used as an adhesive.

## Claims

1. A two-component adhesive composition comprising: a main agent comprising an isocyanate group-terminated urethane prepolymer; and a curing agent comprising a polyoxyalkylene polymer in which a number of functional groups is 4 or more, wherein a number average molecular weight of the polyoxyalkylene polymer is 6000 or more.

2. The two-component adhesive composition according to claim 1, wherein a proportion of a unit based on propylene oxide in the polyoxyalkylene polymer is 60% by mass or more.

3. The two-component adhesive composition according to claim 1 or 2, wherein the polyoxyalkylene polymer comprises a unit based on ethylene oxide.

4. The two-component adhesive composition according to claim 3, wherein in the polyoxyalkylene polymer, a proportion of the unit based on ethylene oxide in the polyoxyalkylene polymer is 5% by mass or more and 40% by mass or less.

5. The two-component adhesive composition according to claim 1 or 2, wherein inter-crosslinking molecular weight obtained by dividing the number average molecular weight of the polyoxyalkylene polymer by a number of functional groups per molecule of the polyoxyalkylene polymer is 1400 or more and 9000 or less.

6. The two-component adhesive composition according to claim 1 or 2, wherein the functional group is a hydroxyl group.

7. The two-component adhesive composition according to claim 6, wherein an isocyanate index representing 100 times a molar ratio of isocyanate groups in the isocyanate group-terminated urethane prepolymer to hydroxyl groups in the polyoxyalkylene polymer (isocyanate group/hydroxyl group) is 80 or more and 150 or less.

8. The two-component adhesive composition according to claim 1 or 2, wherein a proportion of a total of the main agent and the curing agent in the two-component adhesive composition is 50% by mass or more.

9. A cured product obtained by curing the two-component adhesive composition according to claim 1 or 2.
